# EUROPEAN PATENT SPECIFICATION

(11) **EP 3 986 001 B1**
(45) Date of publication and mention of the grant of the patent: **22.04.2026**
(21) Application number: 20848153.1
(22) Date of filing: 17.07.2020
(51) Int. Cl.: H04W 4/40, H04W 24/04, H04W 76/36, H04W 4/90

(54) **VOICE CALL METHOD, APPARATUS AND SYSTEM**
VIDEOANRUFVERFAHREN, VORRICHTUNG UND -SYSTEM
PROCÉDÉ D'APPEL VOCAL, APPAREIL, ET SYSTÈME

(30) Priority: 31.07.2019 CN 201910700835
(43) Date of publication of application: 20.04.2022
(73) Proprietor: Huawei Technologies Co., Ltd., Longgang District Shenzhen, Guangdong 518129 (CN)
(72) Inventor: GONG, Kaijun, Shenzhen, Guangdong 518129 (CN)
(74) Representative: Maiwald GmbH
(86) International application number: PCT/CN2020/102806
(87) International publication number: WO 2021/017903

(56) References cited:
- CN-A- 1 290 113
- CN-A- 102 056 319
- CN-A- 102 149 144
- CN-A- 104 170 516
- CN-A- 105 636 209
- CN-A- 110 149 721
- CN-A- 110 602 663
- US-A1- 2005 107 107
- US-A1- 2012 176 963
- US-B2- 8 611 241

## Description

### TECHNICAL FIELD

This application relates to the communications field, and in particular, to a voice call method, an apparatus, and a system.

### BACKGROUND

US 2012/176963 A1 describes methods and an apparatuses for controlling non-simultaneous voice and data connections between a mobile wireless device and a wireless network. US 8 611 241 B2 describes an approach based on process for selection of resources to be released in case of an overload in a cellular land mobile system. A most important service of an existing vehicle-mounted terminal is usually a voice call service, for example, an automatic traffic accident alarm call and a vehicle fault roadside assistance call. However, a most commonly used service of the existing vehicle-mounted terminal is usually a data service. There is a plurality of types of data services, such as a telematics service provider (telematics service provider, TSP) service, a vehicle-mounted wireless fidelity (wireless fidelity, Wi-Fi) service, and a firmware over-the-air (firmware over the air, FOTA) service. For different types of data services, the vehicle-mounted terminal needs to transmit service data by setting different access point names (access point names, APNs). Generally, each APN occupies one data channel. In other words, one type of data service occupies one data channel. The data channel may be understood as a radio bearer (radio bearer, RB) resource. Therefore, when the vehicle-mounted terminal supports the voice call service and a plurality of types of data services, there may be a case in which the voice call service and the plurality of data services are concurrent. For example, in a long term evolution (long term evolution, LTE) system that supports a voice over long-term evolution (voice over long term evolution, VoLTE) call service, there is a case in which the VoLTE call service and a plurality of packet switched (packet switched, PS) data services are concurrent.

Currently, a network device in the LTE system may allocate a maximum of 11 RB resources to the vehicle-mounted terminal, and this is sufficient to support the concurrency of the VoLTE call service and the plurality of PS data services. However, actually, quantities of RB resources configured by some network devices of a network operator for the vehicle-mounted terminal are far less than 11. Therefore, all the RB resources configured by the network device may be used for signaling transmission and data service transmission of the vehicle-mounted terminal. In this case, the vehicle-mounted terminal fails to initiate a VoLTE call.

In view of the foregoing problem, an existing solution is to notify the operator, so that the operator modifies a network configuration of the network device of the operator, to improve a VoLTE call success rate. However, globally, it is difficult to check the network configurations of the network devices one by one. Therefore, a simple method is required to improve the VoLTE call success rate.

### SUMMARY

The invention is defined by the appended claims. Embodiments of this application provide a voice call method, an apparatus, and a system, to improve a voice call success rate with low complexity.

To achieve the foregoing objective, the following technical solutions are used in the embodiments of this application.

According to a first aspect, a voice call method and a corresponding communications apparatus are provided. The method includes: A terminal device determines that a cause of a failure to initiate a voice call is insufficient RB resources, and the terminal device disconnects a data service, and reinitiates the voice call on an RB resource corresponding to the disconnected data service. In this embodiment of this application, when the voice call fails due to insufficient RB resources, the terminal device actively disconnects the data service, and reinitiates the voice call on the RB resource corresponding to the disconnected data service. In this way, an RB resource required by the voice call is ensured, and a voice call success rate is improved. In addition, in this application, the voice call success rate is improved from a terminal device side. Compared with an existing solution, the method can reduce implementation complexity because a network operator does not need to be notified to modify a network configuration of a network device.

In a possible design, that a terminal device determines that a cause of a failure to initiate a voice call is insufficient RB resources includes: The terminal device receives, from a network device, the cause of the failure to initiate the voice call, where the cause of the failure to initiate the voice call is insufficient RB resources.

In a possible design, that the terminal device disconnects a data service includes: The terminal device disconnects the data service according to a preset rule.

In a possible design, the preset rule includes one or more of the following: disconnecting a data service whose importance level is less than a specified level, disconnecting a data service whose data amount is less than a specified data amount, or disconnecting a data service whose transmission rate is less than a specified rate. Based on this solution, the terminal device disconnects a data service in data services according to the preset rule. In this way, it can be ensured that a more important data service or a data service with high transmission performance remains connected, and an unimportant data service or a data service with relatively low transmission performance is disconnected. This improves flexibility of disconnecting the data service.

In a possible design, disconnecting the data service includes: releasing the RB resource occupied by the data service. Based on this solution, because the terminal device releases the RB resource occupied by the data service, an available RB resource can be provided for the voice call, to improve the service call success rate.

In a possible design, the voice call method provided in this embodiment of this application further includes: The terminal device determines that the voice call ends, and the terminal device initiates a reconnection of the disconnected data service on the RB resource corresponding to the disconnected data service. Based on this solution, after the voice call is completed, the disconnected data service may continue to be performed on the RB resource released after the voice call is completed. Therefore, smooth transmission of the data service is maintained, waste of the RB resource is reduced, and resource utilization is improved.

In a possible design, the terminal device is a vehicle-mounted terminal device, or the terminal device is a chip in a vehicle-mounted terminal device.

According to a second aspect, a communications apparatus is provided, to implement the foregoing method. The communications apparatus may be the terminal device in the first aspect, for example, a vehicle-mounted communications apparatus; an apparatus including the terminal device, for example, various types of vehicles; or an apparatus included in the terminal device, for example, a system chip. The communications apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a third aspect, a communications apparatus is provided, including a processor and a memory. The memory is configured to store computer instructions, and when the processor executes the instructions, the communications apparatus is enabled to perform the method in any one of the foregoing aspects. The communications apparatus may be the terminal device in the first aspect, for example, a vehicle-mounted communications apparatus; an apparatus including the terminal device, for example, various types of vehicles; or an apparatus included in the terminal device, for example, a system chip.

According to a fourth aspect, a communications apparatus is provided, including a processor. The processor is configured to: be coupled to a memory, and after reading instructions in the memory, perform the method in any one of the foregoing aspects according to the instructions. The communications apparatus may be the terminal device in the first aspect, for example, a vehicle-mounted communications apparatus; an apparatus including the terminal device, for example, various types of vehicles; or an apparatus included in the terminal device, for example, a system chip.

According to a fifth aspect, a computer-readable storage medium is provided. The computer-readable storage medium stores instructions, and when the instructions are run on a computer, the computer is enabled to perform the method in any one of the foregoing aspects.

According to a sixth aspect, a computer program product including instructions is provided. When the computer program product runs on a computer, the computer is enabled to perform the method in any one of the foregoing aspects.

According to a seventh aspect, a communications apparatus (for example, the communications apparatus may be a chip or a chip system) is provided. The communications apparatus includes a processor, configured to implement a function in any one of the foregoing aspects. In a possible design, the communications apparatus further includes a memory, and the memory is configured to store necessary program instructions and data. When the communications apparatus is a chip system, the chip system may include a chip, or may include a chip and another discrete component.

According to an eighth aspect, a communications apparatus is provided, including a processor and an interface circuit. The interface circuit is a code/data read and write interface circuit, and the interface circuit is configured to receive code instructions (where the code instructions are stored in a memory, and may be directly read from memory, or may pass through another component) and transmits the code instructions to the processor. The processor is configured to run the code instructions to perform the method according to any one of the foregoing aspects.

For technical effects brought by any one of the designs of the second aspect to the eighth aspect, refer to technical effects brought by the different designs of the first aspect. Details are not described herein again.

According to a ninth aspect, a communications system is provided. The communications system includes the terminal device according to the foregoing aspects.

### BRIEF DESCRIPTION OF DRAWINGS

FIG. 1 is a schematic diagram of a structure of a communications system according to an embodiment of this application;
FIG. 2 is a schematic diagram of a structure of a terminal device or a network device according to an embodiment of this application;
FIG. 3 is a schematic diagram of a structure of another terminal device according to an embodiment of this application;
FIG. 4 is a schematic flowchart of a voice call method according to an embodiment of this application;
FIG. 5 is a schematic flowchart of another voice call method according to an embodiment of this application; and
FIG. 6 is a schematic diagram of a structure of another terminal device according to an embodiment of this application.

### DESCRIPTION OF EMBODIMENTS

For ease of understanding the solutions in the embodiments of this application, brief descriptions or definitions of related technologies are first provided as follows:

### 1. APN

The APN in the embodiments of this application refers to a network access technology, and is a parameter that needs to be configured when a terminal device performs a data service. The parameter determines an access manner in which the terminal device accesses a network. Correspondingly, when different access manners are used, types of data services performed by the terminal device are different. The terminal device may be configured with a plurality of APNs at the same time. To be specific, the terminal device may perform a plurality of types of data services at the same time. Generally, each APN uses one data channel, and the data channel may be understood as an RB resource. For example, the terminal device is configured with three APNs at the same time: an APN 1, an APN 2, and an APN 3. In this case, the terminal device may use a data channel 1 (an RB resource 1) by using the APN 1 to perform a data service of a type 1, use a data channel 2 (an RB resource 2) by using the APN 2 to perform a data service of a type 2, and use a data channel 3 (an RB resource 3) by using the APN 3 to perform a data service of a type 3. Certainly, there may also be a special case in which one APN uses a plurality of data channels (a plurality of RB resources). For example, the terminal device is configured with two APNs at the same time: an APN 4 and an APN 5. In this case, the terminal device may use a data channel 4 (an RB resource 4) and a data channel 5 (an RB resource 5) by using the APN 4 to perform a data service of a type 4, and use a data channel 6 (an RB resource 6) by using the APN 5 to perform a data service of a type 5.

It should be noted that in the embodiments of this application, generally, there is no binding relationship between each APN and an RB resource used by the APN. For example, the APN 1 does not necessarily use the RB resource 1, and may alternatively use the RB resource 2 or the RB resource 3. This is not specifically limited in the embodiments of this application.

In addition, in the embodiments of this application, a voice call service of the terminal device does not need to be implemented by configuring an APN, and the terminal device may perform the voice call service by using any idle data channel (RB resource).

It should be noted that, in the embodiments of this application, unless otherwise specified, all data services are PS data services, all voice call services are VoLTE call services, and all voice calls are VoLTE calls. A unified description is provided herein, and details are not described in the following embodiments again.

The following describes the technical solutions in the embodiments of this application with reference to the accompanying drawings in the embodiments of this application. In the descriptions of this application, "/" represents an "or" relationship between associated objects unless otherwise specified. For example, A/B may represent A or B. The term "and/or" in this application indicates only an association for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items (pieces), including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in the embodiments of this application, terms such as "first" and "second" are used in the embodiments of this application to distinguish between same items or similar items whose functions and purposes are basically the same. A person skilled in the art may understand that the terms such as "first" and "second" do not limit a quantity and an execution sequence, and the terms such as "first" and "second" do not indicate a definite difference.

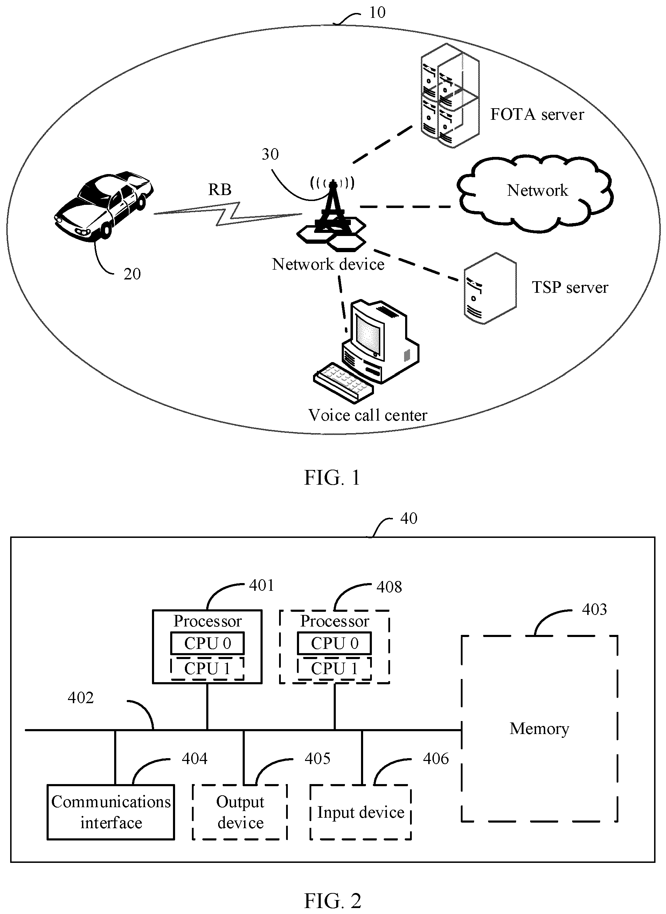

FIG. 1 shows a communications system 10 according to an embodiment of this application. The communications system 10 includes a terminal device 20 and a network device 30. The terminal device 20 is connected to the network device 30 by using an RB resource, to perform a VoLTE call service and different types of data services. For example, the terminal device 20 may communicate with a voice call center shown in FIG. 1 through an RB to complete a VoLTE call. The terminal device 20 may further perform the different types of data services by using different APNs. For example, the terminal device 20 may communicate with a FOTA server shown in FIG. 1 by using an APN 1, to complete a FOTA service. Alternatively, the terminal device 20 may communicate with a network shown in FIG. 1 by using an APN 2, to complete a Wi-Fi service. Alternatively, the terminal device 20 may communicate with a TSP server shown in FIG. 1 by using an APN 3, to complete a TSP service. This is not specifically limited in this embodiment of this application.

Optionally, the terminal device 20 in this embodiment of this application may be a vehicle (vehicle), a terminal installed on a vehicle and configured to assist in driving of the vehicle, for example, a telematics box (telematics box, T-BOX), or a chip in a vehicle-mounted terminal. The terminal may be user equipment (user equipment, UE), an access terminal, a terminal unit, a terminal station, a mobile station, a remote station, a remote terminal, a mobile device, a wireless communications device, a terminal agent, a terminal apparatus, or the like in an LTE network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The vehicle-mounted terminal may be movable or fixed.

Optionally, the network device 30 in this embodiment of this application is a device that enables the terminal device 20 to access a wireless network, and may be an evolved NodeB (evolved Node B, eNB or eNodeB) in LTE, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. This is not specifically limited in this embodiment of this application. Optionally, the base station in this embodiment of this application may include base stations in various forms, for example, a macro base station, a micro base station (which is also referred to as a small cell), a relay station, and an access point. This is not specifically limited in this embodiment of this application.

Optionally, the terminal device 20 or the network device 30 in this embodiment of this application may also be referred to as a communications device (or communications apparatus). The terminal device 20 or the network device 30 may be a general-purpose device or a dedicated device. This is not specifically limited in this embodiment of this application.

Optionally, in this embodiment of this application, the terminal device 20 or the network device 30 in FIG. 1 may be implemented by using a communications device (or communications apparatus) 40 in FIG. 2. FIG. 2 is a schematic diagram of a structure of the communications device 40 according to an embodiment of this application. The communications device 40 includes one or more processors 401, a communications line 402, and at least one communications interface (where an example in which a communications interface 404 and one processor 401 are included is merely used for description in FIG. 2), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communications line 402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus. The communications line 402 is configured to connect different components in the communications device 40, so that the different components can communicate with each other.

The communications interface 404 may be a transceiver module, configured to communicate with another device or a communications network, for example, the Ethernet, a radio access network (radio access network, RAN), or a wireless local area network (wireless local area network, WLAN). For example, the transceiver module may be an apparatus such as a transceiver or a transceiver machine. Optionally, the communications interface 404 may alternatively be a transceiver circuit located in the processor 401, and is configured to implement signal input and signal output of the processor.

The memory 403 may be an apparatus having a storage function. For example, the memory 403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through the communications line 402. The memory may alternatively be integrated with the processor.

The memory 403 is configured to store computer-executable instructions for executing the solutions in this application, and the processor 401 controls execution. The processor 401 is configured to execute the computer-executable instructions stored in the memory 403, to implement the voice call method provided in the embodiments of this application.

Alternatively, optionally, in this embodiment of this application, the processor 401 may perform a processing-related function in the voice call method provided in the following embodiments of this application. The communications interface 404 is responsible for communicating with another device or a communications network. This is not specifically limited in this embodiment of this application.

Optionally, the computer-executable instructions in this embodiment of this application may also be referred to as application program code. This is not specifically limited in this embodiment of this application.

In a specific implementation, in an embodiment, the processor 401 may include one or more CPUs, such as a CPU 0 and a CPU 1 in FIG. 2.

In a specific implementation, in an embodiment, the communications device 40 may include a plurality of processors, such as the processor 401 and a processor 408 in FIG. 2. Each of the processors may be a single-core (single-CPU) processor or a multi-core (multi-CPU) processor. The processor herein may be one or more devices, circuits, and/or processing cores configured to process data (for example, computer program instructions).

In a specific implementation, in an embodiment, the communications device 40 may further include an output device 405 and an input device 406. The output device 405 communicates with the processor 401, and may display information in a plurality of manners. For example, the output device 405 may be a liquid crystal display (liquid crystal display, LCD), a light-emitting diode (light emitting diode, LED) display device, a cathode ray tube (cathode ray tube, CRT) display device, or a projector (projector). The input device 406 communicates with the processor 401, and may receive a user input in a plurality of manners. For example, the input device 406 may be a mouse, a keyboard, a touchscreen device, a sensing device, or the like.

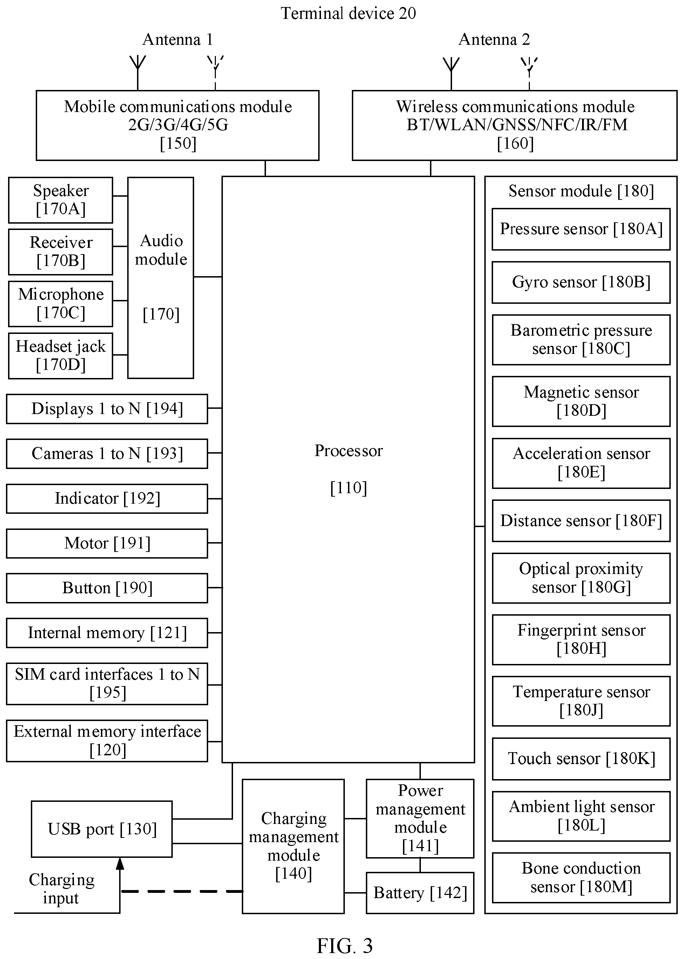

With reference to the schematic diagram of the structure of the communications device 40 shown in FIG. 2, for example, FIG. 3 is a specific form of a structure of the terminal device 20 according to an embodiment of this application.

In some embodiments, a function of the processor 401 in FIG. 2 may be implemented by a processor 110 in FIG. 3.

In some embodiments, a function of the communications interface 404 in FIG. 2 may be implemented through an antenna 1, an antenna 2, a mobile communications module 150, a wireless communications module 160, and the like in FIG. 3.

The antenna 1 and the antenna 2 are configured to transmit and receive electromagnetic wave signals. Each antenna in the terminal device 20 may be configured to cover one or more communications frequency bands. Different antennas may further be multiplexed, to improve antenna utilization. For example, the antenna 1 may be multiplexed as a diversity antenna in a wireless local area network. In some other embodiments, the antenna may be used in combination with a tuning switch.

The mobile communications module 150 may provide a solution that is applied to the terminal device 20 and that includes wireless communication such as 4G. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to a modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same component.

The wireless communications module 160 may provide a solution that is applied to the terminal device 20 and that includes wireless communication such as a wireless local area network (wireless local area network, WLAN) (for example, a Wi-Fi network), Bluetooth (blue tooth, BT), a global navigational satellite system (global navigation satellite system, GNSS), frequency modulation (frequency modulation, FM), near field communication (near field communication, NFC), and an infrared (infrared, IR) technology. The wireless communications module 160 may be one or more components integrating at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2. When the terminal device 20 is a first device, that the wireless communications module 160 may provide an NFC wireless communication solution applied to the terminal device 20 means that the first device includes an NFC chip. The NFC chip can improve an NFC wireless communication function. When the terminal device 20 is a second device, that the wireless communications module 160 may provide an NFC wireless communication solution applied to the terminal device 20 means that the second device includes an electronic label (for example, a radio frequency identification (radio frequency identification, RFID) label). If an NFC chip of another device is close to the electronic label, the another device may perform NFC wireless communication with the second device.

In some embodiments, the antenna 1 of the terminal device 20 is coupled to the mobile communications module 150, and the antenna 2 is coupled to the wireless communications module 160, so that the terminal device 20 can communicate with a network and another device by using a wireless communications technology. The wireless communications technology may include long term evolution (long term evolution, LTE), BT, a GNSS, a WLAN, NFC, FM, an IR technology, or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), or a satellite-based augmentation system (satellite based augmentation system, SBAS).

In some embodiments, a function of the memory 403 in FIG. 2 may be implemented by an internal memory 121, an external memory (for example, a micro SD card) connected to an external memory interface 120 in FIG. 3, or the like.

In some embodiments, a function of the output device 405 in FIG. 2 may be implemented by a display 194 in FIG. 3. The display 194 is configured to display an image, a video, and the like. The display 194 includes a display panel.

In some embodiments, a function of the input device 406 in FIG. 2 may be implemented by a mouse, a keyboard, a touchscreen device, or a sensor module 180 in FIG. 3. For example, as shown in FIG. 3, the sensor module 180 may include one or more of a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M. This is not specifically limited in this embodiment of this application.

In some embodiments, as shown in FIG. 3, the terminal device 20 may further include one or more of an audio module 170, a camera 193, an indicator 192, a motor 191, a button 190, a SIM card interface 195, a USB port 130, a charging management module 140, a power management module 141, and a battery 142. The audio module 170 may be connected to a speaker 170A (which is also referred to as a "loudspeaker"), a receiver 170B (which is also referred to as an "earpiece"), a microphone 170C (which is also referred to as a "mike" or a "mic"), a headset jack 170D, or the like. This is not specifically limited in this embodiment of this application.

It may be understood that the structure shown in FIG. 3 constitute no specific limitation on the terminal device 20. For example, in some other embodiments of this application, the terminal device 20 may include more or fewer components than those shown in the figure, or some components may be combined, or some components may be split, or there may be a different component layout. The components shown in the figure may be implemented by hardware, software, or a combination of software and hardware.

Currently, in an LTE system, quantities of RB resources configured by some network devices of a network operator for a vehicle-mounted terminal are far less than 11. Therefore, all the RB resources configured by the network device may be used for signaling transmission and data service transmission of the vehicle-mounted terminal. In this case, the vehicle-mounted terminal fails to initiate a VoLTE call. In view of this problem, an existing solution is to notify the operator, so that the operator modifies a network configuration of the network device of the operator, to improve a VoLTE call success rate. However, globally, it is difficult to check network configurations of the network devices one by one.

Based on this, the embodiments of this application provide a voice call method. In the voice call method, a terminal device determines that a cause of a failure to initiate a voice call is insufficient RB resources, and the terminal device disconnects a data service, and reinitiates the voice call on an RB resource corresponding to the disconnected data service. In this embodiment of this application, when the voice call fails due to insufficient RB resources, the terminal device actively disconnects the data service, and reinitiates the voice call on the RB resource corresponding to the disconnected data service. In this way, an RB resource required by the voice call is ensured, and a voice call success rate is improved. In addition, in this application, the voice call success rate is improved from a terminal device side. Compared with an existing solution, the method can reduce implementation complexity and reduce a delay in successfully reinitiating the voice call by the terminal device because a network operator does not need to be notified to modify the network configuration of the network device.

The following describes in detail the voice call method provided in the embodiments of this application with reference to FIG. 1 to FIG. 3 by using specific embodiments.

It should be noted that names of messages between network elements, names of parameters in the messages, or the like in the following embodiments of this application are merely examples, and there may be other names in a specific implementation. This is not specifically limited in the embodiments of this application.

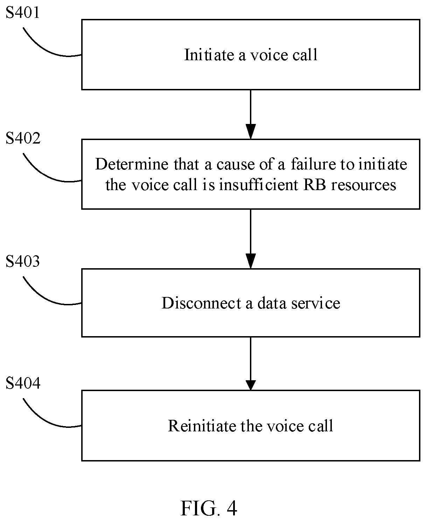

In a possible implementation, as shown in FIG. 4, the voice call method provided in the embodiments of this application includes the following steps.

S401: The terminal device initiates the voice call.

The voice call initiated by the terminal device is a VoLTE call.

Optionally, there are two possible cases after the terminal device initiates the voice call. One possible case is that the terminal device receives a voice call dedicated bearer (dedicated bearer) establishment request from a network device, establishes a voice call dedicated bearer, and successfully initiates the voice call. For related descriptions, refer to the conventional technology. Details are not described herein again. The other possible case is that the terminal device does not receive a voice call dedicated bearer establishment request from a network device. In this case, it may be considered that the terminal device fails to initiate the voice call. Optionally, in this case, the terminal device may perform the following steps S402 to S404.

S402: The terminal device determines that the cause of the failure to initiate the voice call is insufficient

RB resources.

That the terminal device determines that the cause of the failure to initiate the voice call is insufficient RB resources means that, when the terminal device initiates the voice call, all RB resources configured by the network device for the terminal device are used for signaling and a data service of the terminal device, and there is no idle RB resource used by the terminal device to initiate the voice call.

Optionally, when the terminal device does not receive the voice call dedicated bearer establishment request from the network device, a possible cause is that the terminal device receives an error code from the network device, where the error code is used to indicate the cause of the failure to initiate the voice call. Optionally, the error code may indicate that the cause of the failure to initiate the voice call is insufficient RB resources for establishing the voice call dedicated bearer. In this case, the terminal device may determine, based on the error code that is returned by the network device and that indicates that RB resources for establishing the voice call dedicated bearer are insufficient, that the cause of the voice call failure is insufficient RB resources.

It should be noted that, when the terminal device does not receive the voice call dedicated bearer establishment request from the network device, there may be a plurality of causes of the failure to initiate the voice call that are determined by the terminal device. In this embodiment of this application, description is provided only when the cause of the failure to initiate the voice call is insufficient RB resources. In this case, the terminal device continues to perform step S403. When the terminal device determines that the cause of the failure to initiate the voice call is another cause, for related processing, refer to the conventional technology. Details are not described herein again.

S403: The terminal device disconnects the data service.

Optionally, in this embodiment of this application, that the terminal device disconnects the data service may include: The terminal device actively disconnects a network connection of the data service, to release the RB resource occupied by the data service. After disconnecting the network connection of the data service, the terminal device may perform delay processing on an automatic reconnection of the data service, for example, set next automatic reconnection time of the data service. In this way, after the network connection of the data service is disconnected and the RB resource occupied by the data service is released, before the voice call is unsuccessfully reinitiated, a case in which no idle RB resource is used for the voice call again because the data service is reconnected according to a preset automatic reconnection rule can be avoided. This ensures that the released RB resource of the data service can be effectively used for the voice call.

Optionally, in this embodiment of this application, when one APN uses one data channel (one RB resource), the terminal device may disconnect any data service in ongoing data services, or may disconnect a data service in ongoing data services according to a preset rule.

Optionally, the preset rule may be disconnecting a data service whose importance level is lower than a specified level. In this case, the terminal device may set an importance level for each data service. When a data service needs to be disconnected, the terminal device may determine, based on the importance levels of the ongoing data services and the specified level, a data service that finally needs to be disconnected. For example, the importance levels of the data services set by the terminal device are sequentially 1, 2, 3, and 4 in descending order. The data service whose importance level is 1 may be, for example, an important data service, for example, navigation. The data service whose importance level is 4 may be, for example, an entertainment data service, for example, a music data service. If the specified level is 3, the data service, determined by the terminal device, that finally needs to be disconnected may be the data service whose importance level is 4. Alternatively, in this case, the terminal device may set an importance level of a data service performed by using each APN. For example, the terminal device sets the data service whose importance level is 1 to be performed by using an APN 1, the data service whose importance level is 4 to be performed by using an APN 4, and so on. When determining that a data service needs to be disconnected, the terminal device may disconnect a data service performed by using an APN and whose corresponding important level is less than the specified level, and release an RB resource used by the data service, for example, disconnect the data service performed by using the APN 4, and release an RB resource corresponding to the APN 4.

Alternatively, optionally, the preset rule may be preferentially disconnecting a data service whose data amount is small. In this case, the terminal device may determine an amount of data transmitted on each RB resource, disconnect a data service whose data amount is less than a specified data amount, and release an RB resource occupied by the data service.

Alternatively, optionally, the preset rule may be disconnecting a data service whose transmission rate is low. In this case, the terminal device may determine a data transmission rate on each RB resource, disconnect a data service whose transmission rate is less than a specified rate, and release an RB resource occupied by the data service.

Alternatively, optionally, the preset rule may be disconnecting a data service of a specific type, for example, preferentially disconnecting a FOTA service, or preferentially disconnecting an entertainment data service.

It should be noted that the foregoing preset rule may be configured by the network device for the terminal device, or may be preconfigured by the terminal device. This is not specifically limited in this embodiment of this application.

Optionally, in this embodiment of this application, there may be a plurality of data services meeting the foregoing preset rule. In this case, the terminal device may continue to determine, according to another rule, the data service that needs to be disconnected. For example, the foregoing preset rule is disconnecting a data service whose data amount is small. A quantity of data services determined by the terminal device and whose data amounts are less than the specified data amount may be greater than 1. In this case, the terminal device may determine a data service whose data transmission rate is less than the specified rate in the data services whose data amounts are less than the specified data amount, and disconnect the data service whose data amount is less than the specified data amount and whose data transmission rate is less than the specified rate. In this embodiment of this application, the terminal device disconnects the data service in the data services according to the preset rule. In this way, it can be ensured that a more important data service or a data service with high transmission performance remains connected, and an unimportant data service or a data service with relatively low transmission performance is disconnected. This improves flexibility of disconnecting the data service.

Optionally, in this embodiment of this application, when one APN uses a plurality of data channels (a plurality of RB resources), the terminal device may first select one APN, and then release one of a plurality of RB resources corresponding to the APN. For example, the terminal device may select an APN corresponding to a data service with a relatively low importance level, and release any RB resource in a plurality of RB resources corresponding to the APN, or release, according to a preset rule, one of a plurality of RB resources corresponding to the APN. For example, the preset rule may be releasing an RB resource whose data amount is less than the specified data amount or whose data transmission rate is less than the specified rate in the RB resources corresponding to the APN. This is not specifically limited in this embodiment of this application.

After disconnecting the data service, the terminal device continues to perform step S404.

S404: The terminal device reinitiates the voice call.

The reinitiated voice call is the voice call initiated in step S401.

Optionally, when one APN uses one data channel (one RB resource), that the terminal device reinitiates the voice call includes: The terminal device reinitiates the voice call on the RB resource corresponding to the data service disconnected in step S403.

Optionally, in this scenario, after the voice call reinitiated by the terminal device is completed, the RB resource used for the voice call is actively released after the voice call is disconnected. In this case, the terminal device may determine that the voice call ends, and may further reconnect, according to the automatic reconnection rule of the disconnected data service, the data service on the RB resource released after the voice call is completed, to restore the disconnected data service. Alternatively, a software service function inside the terminal device may trigger a reconnection of the disconnected data service, to restore the disconnected data service. The automatic reconnection rule of the disconnected data service may be configured by the network device, or may be preconfigured by the terminal device. This is not specifically limited in this embodiment of this application. In this embodiment of this application, after the voice call is completed, the disconnected data service can continue to be performed on the RB resource released after the voice call is completed. Therefore, smooth transmission of the data service is maintained, waste of the RB resource is reduced, and resource utilization is improved.

Optionally, when one APN uses a plurality of data channels (a plurality of RB resources), that the terminal device reinitiates the voice call includes: The terminal device reinitiates the voice call on the released RB resource corresponding to the APN selected in step S403.

Optionally, in this scenario, the terminal device may continue to perform a data service by using another unreleased RB resource corresponding to the APN. Optionally, in this embodiment of this application, in this scenario, after the voice call reinitiated by the terminal device is completed, the RB resource used for the voice call is actively released after the voice call is disconnected. In this case, the terminal device may determine that the voice call ends, and data may further be transmitted on the RB resource released after the voice call is completed together with the another unreleased RB resource. In this embodiment of this application, after the voice call is completed, data can continue to be transmitted on the RB resource released after the voice call is completed. Therefore, smooth transmission of the data service is maintained, waste of the RB resource is reduced, and resource utilization is improved.

Based on this solution, in this embodiment of this application, when the voice call fails due to insufficient RB resources, the terminal device actively disconnects the data service, and reinitiates the voice call on the RB resource corresponding to the disconnected data service. In this way, the RB resource required by the voice call is ensured, and the voice call success rate is improved. In addition, in this application, the voice call success rate is improved from the terminal device side. Compared with an existing solution, the method can reduce the implementation complexity and reduce the delay in successfully reinitiating the voice call by the terminal device because the network operator does not need to be notified to modify the network configuration of the network device.

The processor 401 in the communications apparatus 40 shown in FIG. 2 may invokes the application program code stored in the memory 403, to indicate the communications apparatus to perform actions of the terminal device in steps S401 to S404. This is not limited in this embodiment.

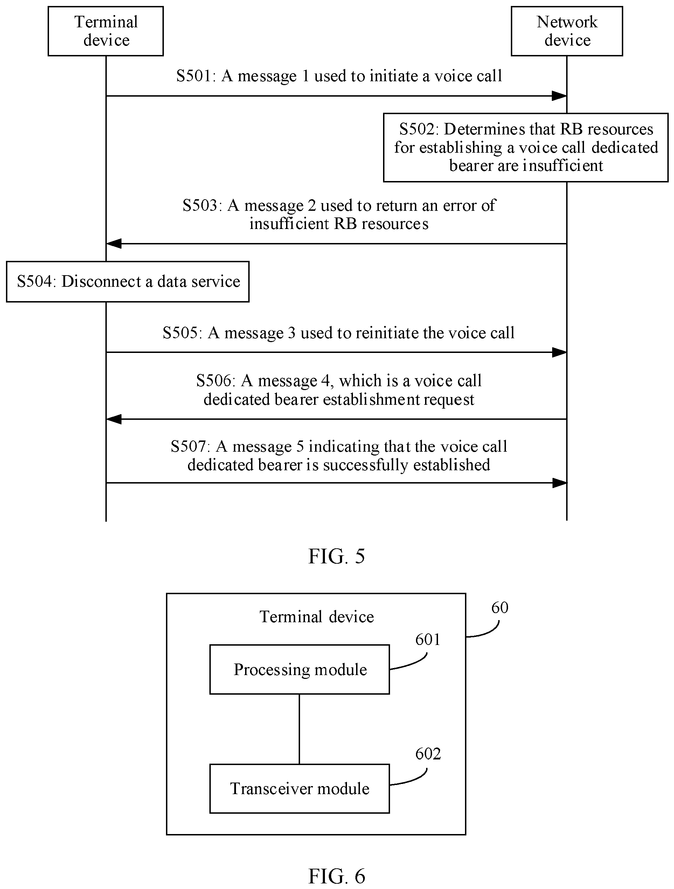

In another possible implementation, the voice call method shown in FIG. 4 in the embodiments of this application is described by using an example in which the terminal device interacts with the network device. As shown in FIG. 5, the voice call method provided in the embodiments of this application includes the following steps.

S501: The terminal device sends a message 1 to the network device. Correspondingly, the network device receives the message 1 from the terminal device.

The message 1 is used by the terminal device to initiate the voice call.

S502: The network device determines that the RB resources for establishing the voice call dedicated bearer are insufficient.

When the terminal device initiates the voice call, if all the RB resources allocated by the network device to the terminal device are used for the data service, the network device may determine that the RB resources for establishing the voice call dedicated bearer are insufficient.

S503: The network device sends a message 2 to the terminal device. Correspondingly, the terminal device receives the message 2 from the network device.

The message 2 is used by the network device to return, to the terminal device, an error that the RB resources for establishing the voice call dedicated bearer are insufficient.

After receiving the message 2 from the network device, the terminal device may determine that the cause of the failure to initiate the voice call is insufficient RB resources, and may further perform step S504.

S504: The terminal device disconnects the data service.

For related descriptions of disconnecting the data service by the terminal device, refer to descriptions in step S403, and details are not described herein again.

S505: The terminal device sends a message 3 to the network device. Correspondingly, the network device receives the message 3 from the terminal device.

The message 3 is used by the terminal device to reinitiate the voice call initiated in step S501. For related descriptions of reinitiating the voice call by the terminal device, refer to descriptions in step S404, and details are not described herein again.

S506: The network device sends a message 4 to the terminal device. Correspondingly, the terminal device receives the message 4 from the network device.

The message 4 is used to request to establish the voice call dedicated bearer.

Optionally, after the network device receives the message 3 that is used to reinitiate the voice call and that is from the terminal device, because the terminal device disconnects the data service in step S504, there is an idle RB resource used by the terminal device to initiate the voice call. Therefore, the network device sends, to the terminal device, the message 4 used to request to establish the voice call dedicated bearer.

Optionally, because there is an idle RB resource, the terminal device can establish the voice call dedicated bearer after receiving the message 4, and perform the following step S507 after the voice call dedicated bearer is successfully established.

S507: The terminal device sends a message 5 to the network device. Correspondingly, the network device receives the message 5 from the terminal device.

The message 5 is used to indicate that the voice call dedicated bearer is successfully established.

Based on this solution, in this embodiment of this application, when determining, based on the error of insufficient RB resources returned by the network device, that the voice call fails due to insufficient RB resources, the terminal device actively disconnects the data service, and reinitiates the voice call on the RB resource corresponding to the disconnected data service. In this way, the RB resource required by the voice call is ensured, and the voice call success rate is improved. In addition, in this application, the voice call success rate is improved from the terminal device side. Compared with an existing solution, the method can reduce the implementation complexity and reduce the delay in successfully reinitiating the voice call by the terminal device because a network operator does not need to be notified to modify the network configuration of the network device.

The processor 401 in the communications apparatus 40 shown in FIG. 2 may invoke the application program code stored in the memory 403, to indicate the communications apparatus to perform actions of the terminal device in steps S501 to S507. The processor 401 in the communications apparatus 40 shown in FIG. 2 may invoke the application program code stored in the memory 403, to indicate the communications apparatus to perform actions of the network device in steps S501 to S507. This is not limited in this embodiment.

It may be understood that, in the foregoing embodiments, methods and/or steps implemented by the terminal device may alternatively be implemented by a component (for example, a chip or a circuit) that can be used in the terminal device, and methods and/or steps implemented by the network device may alternatively be implemented by a component that can be used in the network device.

The foregoing mainly describes the solutions provided in the embodiments of this application from a perspective of interaction between network elements. Correspondingly, an embodiment of this application further provides a communications apparatus, and the communications apparatus is configured to implement the foregoing methods. The communications apparatus may be the terminal device in the foregoing method embodiments, for example, a vehicle-mounted communications apparatus; an apparatus including the terminal device, for example, various types of vehicles; or an apparatus included in the terminal device, for example, a system chip. It may be understood that, to implement the foregoing functions, the communications apparatus includes a corresponding hardware structure and/or software module for performing each function. A person skilled in the art should easily be aware that units and algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the communications apparatus may be divided into function modules based on the foregoing method embodiments. For example, each function module may be obtained through division based on each corresponding function, or two or more functions may be integrated into one processing module. The integrated module may be implemented in a form of hardware, or may be implemented in a form of a software function module. It should be noted that, in the embodiments of this application, division into the modules is an example, and is merely a logical function division. In actual implementation, another division manner may be used.

For example, the communications apparatus is the terminal device in the foregoing method embodiments. FIG. 6 is a schematic diagram of a structure of a terminal device 60. The terminal device 60 includes a processing module 601 and a transceiver module 602. The transceiver module 602 may also be referred to as a transceiver unit, and is configured to implement a sending and/or receiving function, for example, may be a transceiver circuit, a transceiver machine, a transceiver, or a communications interface.

The processing module 601 is configured to determine that a cause of a failure to initiate a voice call is insufficient RB resources. The processing module 601 is further configured to disconnect a data service, and the processing module 601 is further configured to reinitiate, by using the transceiver module 602, the voice call on an RB resource corresponding to the disconnected data service.

Optionally, that the processing module 601 is configured to determine that a cause of a failure to initiate a voice call is insufficient RB resources includes: The processing module 601 is configured to receive, from a network device by using the transceiver module 602, the cause of the failure to initiate the voice call, where the cause of the failure to initiate the voice call is insufficient RB resources.

Optionally, that processing module 601 is further configured to disconnect a data service includes: The processing module 601 is further configured to disconnect the data service according to a preset rule.

Optionally, that the processing module 601 is configured to disconnect a data service includes: The processing module 601 is configured to release the RB resource occupied by the data service.

Optionally, the processing module 601 is further configured to determine that the voice call ends. The processing module 601 is further configured to initiate a reconnection of the disconnected data service on the RB resource corresponding to the disconnected data service.

All related content of the steps in the foregoing method embodiments may be cited in function descriptions of corresponding function modules. Details are not described herein again.

In this embodiment, the terminal device 60 is presented in a form of function modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the terminal device 60 may be in a form of the communications device 40 shown in FIG. 2.

For example, the processor 401 in the communications device 40 shown in FIG. 2 may invoke the computer-executable instructions stored in the memory 403, to enable the communications device 40 to perform the voice call method in the foregoing method embodiments.

For example, the processor 401 in the communications device 40 shown in FIG. 2 may invoke the computer-executable instructions stored in the memory 403, to implement functions/implementation processes of the processing module 601 and the transceiver module 602 in FIG. 6. Alternatively, the processor 401 in the communications device 40 shown in FIG. 2 may invoke the computer-executable instructions stored in the memory 403, to implement a function/implementation process of the processing module 601 in FIG. 6, and a function/implementation process of the transceiver module 602 in FIG. 6 may be implemented through the communications interface 404 in the communications device 40 shown in FIG. 2.

The terminal device 60 provided in this embodiment can perform the foregoing voice call method. Therefore, for a technical effect that can be achieved by the terminal device 60, refer to the foregoing method embodiments. Details are not described herein again.

Optionally, an embodiment of this application further provides a communications apparatus (for example, the communications apparatus may be a chip or a chip system). The communications apparatus includes a processor, configured to implement the method in any one of the foregoing method embodiments. In a possible design, the communications apparatus further includes a memory. The memory is configured to store necessary program instructions and data. The processor may invoke the program instructions stored in the memory, to indicate the communications apparatus to perform the method in any one of the foregoing method embodiments. Certainly, the memory may not be located in the communications apparatus. When the communications apparatus is a chip system, the communications apparatus may include a chip, or may include a chip and another discrete component. This is not specifically limited in this embodiment of this application. Alternatively, the communications apparatus includes a processor and an interface circuit. The interface circuit is a code/data read and write interface circuit, and the interface circuit is configured to receive code instructions (where the code instructions are stored in the memory, and may be read directly from the memory, or may pass through another component) and transmits the code instructions to the processor. The processor is configured to run the code instructions to perform the method in any one of the foregoing method embodiments.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In the embodiments of this application, the computer may include the apparatuses described above.

Although this application is described with reference to the embodiments, in a process of implementing this application that claims protection, a person skilled in the art may understand and implement other variations of the disclosed embodiments by viewing the accompanying drawings, disclosed content, and the appended claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a great effect.

Although this application is described with reference to specific features and the embodiments thereof, it is clear that various modifications and combinations may be made to them without departing from the scope of this application. Correspondingly, the specification and the accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application This application is intended to cover these modifications and variations of this application provided that they fall within the scope of protection defined by the claims of this application and equivalent technologies thereof.

## Claims

1. A voice call method, wherein the method comprises:
determining (S402), by a terminal device, that a cause of a failure to initiate a voice call is insufficient radio bearer, RB resources; and
disconnecting (S403), by the terminal device, a data service, and reinitiating, by the terminal device, the voice call on an RB resource corresponding to the disconnected data service, wherein the determining, by a terminal device, that a cause of a failure to initiate a voice call is insufficient RB resources comprises:
receiving, by the terminal device from a network device, the cause of the failure to initiate the voice call, wherein the cause of the failure to initiate the voice call is insufficient RB resources.

2. The method according to claim 1, wherein the disconnecting, by the terminal device, a data service comprises:
disconnecting, by the terminal device, the data service according to a preset rule.

3. The method according to claim 2, wherein the preset rule comprises one or more of the following:
disconnecting a data service whose importance level is less than a specified level, disconnecting a data service whose data amount is less than a specified data amount, or disconnecting a data service whose transmission rate is less than a specified rate.

4. The method according to any one of claims 1 to 3, wherein the disconnecting a data service comprises:
releasing the RB resource occupied by the data service.

5. The method according to any one of claims 1 to 4, wherein the method further comprises:
determining, by the terminal device, that the voice call ends; and
initiating, by the terminal device, a reconnection of the disconnected data service on the RB resource corresponding to the disconnected data service.

6. The method according to any one of claims 1 to 6, wherein the terminal device is a vehicle-mounted terminal device, or the terminal device is a chip in a vehicle-mounted terminal device.

7. A terminal device (60), wherein the terminal device comprises a processing module (601) and a transceiver module (602), wherein
the processing module is configured to determine that a cause of a failure to initiate a voice call is insufficient radio bearer RB resources;
the processing module is further configured to disconnect a data service; and
the processing module is further configured to reinitiate, by using the transceiver module, the voice call on an RB resource corresponding to the disconnected data service, wherein that the processing module is configured to determine that a cause of a failure to initiate a voice call is insufficient radio bearer RB resources comprises:
the processing module is configured to receive, from a network device by using the transceiver module, the cause of the failure to initiate the voice call, wherein the cause of the failure to initiate the voice call is insufficient RB resources.

8. The terminal device according to claim 7, wherein that the processing module is further configured to disconnect a data service comprises:
the processing module is configured to disconnect the data service according to a preset rule.

9. The terminal device according to claim 8, wherein the preset rule comprises one or more of the following:
disconnecting a data service whose importance level is less than a specified level, disconnecting a data service whose data amount is less than a specified data amount, or disconnecting a data service whose transmission rate is less than a specified rate.

10. The terminal device according to any one of claims 7 to 9, wherein that the processing modules is further configured to disconnect a data service comprises:
releasing the RB resource occupied by the data service.

11. The terminal device according to any one of claims 7 to 10, wherein the processing module is further configured to determine that the voice call ends; and
the processing module is further configured to initiate a reconnection of the disconnected data service on the RB resource corresponding to the disconnected data service.

12. The terminal device according to any one of claims 8 to 11, wherein the terminal device is a vehicle-mounted terminal device, or the terminal device is a chip in a vehicle-mounted terminal device.

13. A computer-readable storage medium, comprising instructions, wherein when the instructions are run on a computer, the computer is enabled to perform the method according to any one of claims 1 to 6.

## Patentansprüche

1. Videoanrufverfahren, wobei das Verfahren Folgendes umfasst:
Bestimmen (S402), dass eine Ursache für ein Fehlschlagen des Initiierens eines Sprachanrufs unzureichende Funkträgerressourcen, RB-Ressourcen, sind, durch eine Endgerätevorrichtung; und
Trennen (S403) eines Datendienstes durch die Endgerätevorrichtung und erneutes Initiieren des Sprachanrufs auf einer RB-Ressource, die dem getrennten Datendienst entspricht, durch die Endgerätevorrichtung, wobei das Bestimmen, dass eine Ursache für ein Fehlschlagen des Initiierens eines Sprachanrufs unzureichende RB-Ressourcen sind, durch eine Endgerätevorrichtung, Folgendes umfasst:
Empfangen der Ursache für das Fehlschlagen des Initiierens des Sprachanrufs durch die Endgerätevorrichtung, wobei die Ursache für das Fehlschlagen des Initiierens des Sprachanrufs unzureichende RB-Ressourcen sind.

2. Verfahren nach Anspruch 1, wobei das Trennen eines Datendienstes durch die Endgerätevorrichtung Folgendes umfasst:
Trennen des Datendienstes durch die Endgerätevorrichtung entsprechend einer voreingestellten Regel.

3. Verfahren nach Anspruch 2, wobei die voreingestellte Regel eines oder mehrere von Folgendem umfasst:
Trennen eines Datendienstes, dessen Wichtigkeitsgrad unterhalb eines vorgegebenen Niveaus liegt, Trennen eines Datendienstes, dessen Datenmenge unterhalb einer vorgegebenen Datenmenge liegt, oder Trennen eines Datendienstes, dessen Übertragungsrate unterhalb einer vorgegebenen Rate liegt.

4. Verfahren nach einem der Ansprüche 1 bis 3, wobei das Trennen eines Datendienstes Folgendes umfasst:
Freigeben der von dem Datendienst belegten RB-Ressource.

5. Verfahren nach einem der Ansprüche 1 bis 4, wobei das Verfahren ferner Folgendes umfasst:
Bestimmen, dass der Videoanruf beendet ist, durch die Endgerätevorrichtung; und
Initiieren einer erneuten Verbindung des getrennten Datendienstes auf der RB-Ressource, die dem getrennten Datendienst entspricht, durch die Endgerätevorrichtung.

6. Verfahren nach einem der Ansprüche 1 bis 6, wobei es sich bei der Endgerätevorrichtung um eine am Fahrzeug montierten Endgerätevorrichtung handelt oder es sich bei der Endgerätevorrichtung um einen Chip in einer am Fahrzeug montierten Endgerätevorrichtung handelt.

7. Endgerätevorrichtung (60), wobei die Endgerätevorrichtung ein Verarbeitungsmodul (601) und ein Sendeempfängermodul (602) umfasst, wobei
das Verarbeitungsmodul dazu konfiguriert ist, zu bestimmen, dass eine Ursache für ein Fehlschlagen des Initiierens eines Sprachanrufs unzureichende Funkträgerressourcen, RB-Ressourcen, sind;
das Verarbeitungsmodul ferner dazu konfiguriert ist, einen Datendienst zu trennen; und
das Verarbeitungsmodul ferner dazu konfiguriert ist, durch Verwenden des Sendeempfängermoduls den Sprachanruf auf einer RB-Ressource, die dem getrennten Datendienst entspricht, neu zu initiieren, wobei, dass das Verarbeitungsmodul dazu konfiguriert ist, zu bestimmen, dass eine Ursache für ein Fehlschlagen des Initiieren eines Sprachanrufs unzureichende FunkträgerRessourcen, RB-Ressourcen, sind, Folgendes umfasst:
das Verarbeitungsmodul dazu konfiguriert ist, von einer Netzwerkvorrichtung unter Verwendung des Sendeempfängermoduls die Ursache für das Fehlschlagen des Initiierens des Sprachanrufs zu empfangen, wobei die Ursache für das Fehlschlagen des Initiierens des Sprachanrufs unzureichende RB-Ressourcen sind.

8. Endgerätevorrichtung nach Anspruch 7, wobei, dass das Verarbeitungsmodul ferner dazu konfiguriert ist, einen Datendienst zu trennen, Folgendes umfasst:
dass das Verarbeitungsmodul dazu konfiguriert ist, den Datendienst entsprechend einer voreingestellten Regel zu trennen.

9. Endgerätevorrichtung nach Anspruch 8, wobei die voreingestellte Regel eine oder mehrere von Folgendem umfasst:
Trennen eines Datendienstes, dessen Wichtigkeitsgrad unterhalb eines vorgegebenen Niveaus liegt, Trennen eines Datendienstes, dessen Datenmenge unterhalb einer vorgegebenen Datenmenge liegt, oder Trennen eines Datendienstes, dessen Übertragungsrate unterhalb einer vorgegebenen Rate liegt.

10. Endgerätevorrichtung nach einem der Ansprüche 7 bis 9, wobei, dass das Verarbeitungsmodul ferner dazu konfiguriert ist, einen Datendienst zu trennen, Folgendes umfasst:
Freigeben der von dem Datendienst belegten RB-Ressource.

11. Endgerätevorrichtung nach einem der Ansprüche 7 bis 10, wobei das Verarbeitungsmodul ferner dazu konfiguriert ist, zu bestimmen, dass der Videoanruf beendet ist; und
das Verarbeitungsmodul ferner dazu konfiguriert ist, eine erneute Verbindung des getrennten Datendienstes auf der RB-Ressource zu initiieren, die dem getrennten Datendienst entspricht.

12. Endgerätevorrichtung nach einem der Ansprüche 8 bis 11, wobei es sich bei der Endgerätevorrichtung um eine am Fahrzeug montierte Endgerätevorrichtung handelt oder es sich bei der Endgerätevorrichtung um einen Chip in einer am Fahrzeug montierten Endgerätevorrichtung handelt.

13. Computerlesbares Speichermedium, umfassend Anweisungen, wobei, wenn die Anweisungen auf einem Computer ausgeführt werden, es dem Computer ermöglicht wird, das Verfahren nach einem der Ansprüche 1 bis 6 durchzuführen.

## Revendications

1. Procédé d'appel vocal, dans lequel le procédé comprend :
la détermination (S402), par un dispositif terminal, du fait qu'une cause d'un échec d'établissement d'un appel vocal est une insuffisance de ressources de support radio (RB) ; et
la déconnexion (S403), par le dispositif terminal, d'un service de données, et le nouvel établissement, par le dispositif terminal, de l'appel vocal sur une ressource RB correspondant au service de données déconnecté, dans lequel la détermination, par un dispositif terminal, qu'une cause d'un échec d'établissement d'un appel vocal est une insuffisance de ressources RB comprend :
la réception, par le dispositif terminal en provenance d'un dispositif réseau, de la cause de l'échec d'établissement de l'appel vocal, dans lequel la cause de l'échec d'établissement de l'appel vocal est l'insuffisance de ressources RB.

2. Procédé selon la revendication 1, dans lequel la déconnexion, par le dispositif terminal, d'un service de données comprend :
la déconnexion, par le dispositif terminal, du service de données selon une règle prédéfinie.

3. Procédé selon la revendication 2, dans lequel la règle prédéfinie comprend l'une ou plusieurs de ce qui suit :
la déconnexion d'un service de données dont le niveau d'importance est inférieur à un niveau spécifié, la déconnexion d'un service de données dont la quantité de données est inférieure à une quantité de données spécifiée, ou la déconnexion d'un service de données dont le débit d'émission est inférieur à un débit spécifié.

4. Procédé selon l'une quelconque des revendications 1 à 3, dans lequel la déconnexion d'un service de données comprend :
la libération de la ressource RB occupée par le service de données.

5. Procédé selon l'une quelconque des revendications 1 à 4, dans lequel le procédé comprend également :
la détermination, par le dispositif terminal, du fait que l'appel vocal est terminé ; et
l'établissement, par le dispositif terminal, d'une reconnexion du service de données déconnecté sur la ressource RB correspondant au service de données déconnecté.

6. Procédé selon l'une quelconque des revendications 1 à 6, dans lequel le dispositif terminal est un dispositif terminal monté sur véhicule, ou le dispositif terminal est une puce dans un dispositif terminal monté sur véhicule.

7. Dispositif terminal (60), dans lequel le dispositif terminal comprend un module de traitement (601) et un module émetteur-récepteur (602), dans lequel
le module de traitement est configuré pour déterminer qu'une cause d'un échec d'établissement d'un appel vocal est une insuffisance de ressources de support radio RB ;
le module de traitement est également configuré pour déconnecter un service de données ; et
le module de traitement est également configuré pour établir à nouveau, à l'aide du module émetteur-récepteur, l'appel vocal sur une ressource RB correspondant au service de données déconnecté, dans lequel le fait que le module de traitement est configuré pour déterminer qu'une cause d'un échec d'établissement d'un appel vocal est une insuffisance de ressources de support radio RB comprend :
le module de traitement est configuré pour recevoir, à partir d'un dispositif réseau à l'aide du module émetteur-récepteur, la cause de l'échec d'établissement de l'appel vocal, dans lequel la cause de l'échec d'établissement de l'appel vocal est l'insuffisance de ressources RB.

8. Dispositif terminal selon la revendication 7, dans lequel le fait que le module de traitement est également configuré pour déconnecter un service de données comprend :
le module de traitement est configuré pour déconnecter le service de données selon une règle prédéfinie.

9. Dispositif terminal selon la revendication 8, dans lequel la règle prédéfinie comprend l'une ou plusieurs de ce qui suit :
la déconnexion d'un service de données dont le niveau d'importance est inférieur à un niveau spécifié, la déconnexion d'un service de données dont la quantité de données est inférieure à une quantité de données spécifiée, ou la déconnexion d'un service de données dont le débit d'émission est inférieur à un débit spécifié.

10. Dispositif terminal selon l'une quelconque des revendications 7 à 9, dans lequel le fait que les modules de traitement sont également configurés pour déconnecter un service de données comprend :
la libération de la ressource RB occupée par le service de données.

11. Dispositif terminal selon l'une quelconque des revendications 7 à 10, dans lequel le module de traitement est également configuré pour déterminer que l'appel vocal se termine ; et
le module de traitement est également configuré pour établir une reconnexion du service de données déconnecté sur la ressource RB correspondant au service de données déconnecté.

12. Procédé selon l'une quelconque des revendications 8 à 11, dans lequel le dispositif terminal est un dispositif terminal monté sur véhicule, ou le dispositif terminal est une puce dans un dispositif terminal monté sur véhicule.

13. Support de stockage lisible par ordinateur, comprenant des instructions, dans lequel, lorsque les instructions sont exécutées sur un ordinateur, l'ordinateur est en mesure de réaliser le procédé selon l'une quelconque des revendications 1 à 6.
